(19) Europäisches Patentamt

European Patent Office

Office européen des brevets

(11) **EP 2 394 771 B1**

(12) **FASCICULE DE BREVET EUROPEEN**

(45) Date de publication et mention de la délivrance du brevet:
**08.04.2015 Bulletin 2015/15**

(51) Int Cl.:
***B23K 9/02*** *(2006.01)*   ***B23K 9/09*** *(2006.01)*
***B23K 35/368*** *(2006.01)*

(21) Numéro de dépôt: **11165806.8**

(22) Date de dépôt: **12.05.2011**

(54) **Procédé de soudage des aciers à hautes limites élastiques avec fil fourré basique**

Schweißverfahren von hochfesten Stählen mit einem basischen Fülldraht

Method for welding high strength steels with basic flux-cored wire

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.06.2010 FR 1054579**

(43) Date de publication de la demande:
**14.12.2011 Bulletin 2011/50**

(73) Titulaire: **AIR LIQUIDE WELDING FRANCE**
**75007 Paris (FR)**

(72) Inventeurs:
• **Ehrhart, Gilles**
**95310 Saint Ouen l'aumone (FR)**
• **Dubet, Olivier**
**78210 Saint Cyr l'Ecole (FR)**
• **Grégoire, Sylvie**
**95300 Pontoise (FR)**
• **Plottier, Gérard**
**93380 Pierrefitte (FR)**

(74) Mandataire: **Pittis, Olivier**
**L'Air Liquide, S.A.**
**Service Brevets & Marques**
**75, Quai d'Orsay**
**75321 Paris Cedex 07 (FR)**

(56) Documents cités:
| | |
|---|---|
| EP-A1- 0 032 337 | EP-A1- 1 046 454 |
| BE-A- 675 411 | DE-B1- 1 440 282 |
| FR-A- 1 594 420 | JP-A- 9 253 886 |
| JP-A- 55 036 007 | JP-A- 58 151 993 |
| US-A- 3 805 016 | US-A- 5 192 851 |
| US-A1- 2004 173 592 | |

**Description**

L'invention concerne un procédé de soudage à l'arc pulsé avec fil basique fusible des aciers à haute limite élastique (HLE), ayant une limite élastique supérieure à 460 MPa, en particulier entre 690 et 830 MPa, tel que décrit dans le document JP-A-09253886.

Les aciers à haute limite élastique (HLE), ayant une limite élastique supérieure à 460 MPa, sont de plus en plus utilisés car ils permettent une réduction des épaisseurs de structures métalliques, du poids des structures en de tels aciers et des coûts de construction associés.

On peut citer par exemple leur utilisation dans la construction des plateformes offshore, en particulier des pieds supportant les plateformes au-dessus du niveau de la mer et les engins de levage.

Pour chaque application, une solution de soudage adaptée doit être disponible. Toutefois, deux principaux défis métallurgiques sont à relever : la susceptibilité à la fissuration à froid et les propriétés mécaniques sur assemblage.

Il existe sur le marché des produits consommables de soudage, à savoir des fils fusibles, permettant d'obtenir des joints ayant un niveau de limite élastique requis.

Toutefois, la principale difficulté en soudage des aciers HLE est de réussir à combiner un haut niveau de traction et de bonnes caractéristiques de résilience.

En effet, la limite élastique du métal soudé est directement liée à sa composition chimique. Elle doit donc être optimisée pour permettre l'obtention de propriétés de traction élevées tout en conservant un niveau de résilience au-dessus du minimum requis par l'application visée.

Aujourd'hui, les principaux consommables de soudage des aciers HLE sont les électrodes enrobées de type basique, les fils fourrés de type rutile et les fils fourrés de type basique. Ces deux familles de consommables présentent des avantages et des inconvénients.

Ainsi, les fils fourrés rutile sont très appréciés pour leurs qualité opératoires, à savoir un très bon détachement de laitier, un soudage en toute position et à haute productivité, à savoir une vitesse fil de 7 à 10 m/min en position verticale montante, des cordons plats, très peu de reprise ou de parachèvement, en particulier de meulage, des joints soudés.

Malheureusement, les fils fourrés sont parfois limités techniquement lorsque l'acier soudé est allié, c'est-à-dire qu'il contient des éléments de type Cr, Ni, Mo, V et/ou Nb, et encore plus si un traitement de détentionnement est prévu sur l'assemblage final.

En effet, l'utilisation d'un fil avec un laitier rutile (i.e. $TiO_2$) résulte en un important transfert de Ti provenant du fil vers le métal fondu. Cet élément Ti, lorsqu'il est combiné avec les éléments d'alliage cité auparavant venant de la dilution du métal de base, induit un important effet de durcissement de l'acier, résultant en une augmentation des propriétés de traction et une baisse inexorable des résiliences.

Par ailleurs, les électrodes enrobées de type basique ne transfèrent que très peu de Ti dans le métal fondu. Elles ne sont donc pas à l'origine de telles dégradations des propriétés mécaniques.

Toutefois, bien que leur comportement opératoire soit tout à fait acceptable, la productivité d'un procédé de soudage les mettant en oeuvre, est très nettement inférieure à celle obtenu avec les fils fourrés, ce qui freine considérablement leur utilisation au plan industriel.

Dès lors, l'utilisation des fils fourrés est privilégiée et afin d'empêcher le phénomène de durcissement dans le métal fondu susmentionné, il est recommandé d'utiliser des fils fourrés de type basique pour lesquels le transfert en élément Ti dans le métal fondu est limité. De tels fils fourrés basiques présentent en outre l'avantage de pouvoir conduire à une proportion d'hydrogène diffusible particulièrement basse dans le cordon soudé, à savoir moins de 2 ml/100g de métal déposé garantissant l'absence de fissuration à froid pour des conditions de soudage moins restrictives.

Malheureusement, de tels fils fourrés basiques sont difficilement utilisables en soudage toute position, plus particulièrement en verticale montante, car ils engendrent des problèmes de tenue de bain. En effet, un bain très fluide combiné à une quantité faible d'éléments de laitier rend son maintien en position verticale montante difficile. Dans ce cas, le bain a tendance à grossir et à s'effondrer donnant ainsi au final une forme de cordon très convexe.

Par ailleurs, des études menées sur des fils massifs ont visé à montrer l'influence de synergies spécifiques, en courant lisse ou courant pulsé, sur ces fils de soudage afin de tenter d'en améliorer le comportement en soudage.

Ainsi, l'article de A. P. Joseph, *Assessing the effects of GMAW-pulse parameters on arc power and weld heat input,* Master Degree Thesis in Ohio State University; montre l'influence du type de courant sur l'énergie de soudage.

La principale préoccupation de ces études et articles est de comparer les différents modes de calcul de l'énergie de soudage en fonction des paramètres opératoires, à savoir tension, intensité et vitesse de soudage. Il en est résulté la formule suivante :

$$\text{Energie de soudage} = \frac{\text{tension de soudage} \times \text{intensité de soudage}}{\text{vitesse de soudage}} \quad \text{(exprimée en kJ/cm)}$$

S'il apparaît en courant lisse (CC+ ou -) que le calcul est assez simple et permet efficacement d'obtenir une idée de l'énergie de soudage au facteur de rendement du procédé près, cela semble plus compliqué dans le cas du courant pulsé.

Ce dernier type de courant est à l'origine de nombre de discussion quant à la méthode de calcul à employer pour déterminer l'énergie de soudage. Certains documents préconisent un calcul simple à partir de la moyenne des paramètres de soudage, alors que d'autres proposent de tenir compte du carré des paramètres électriques ou de l'énergie instantanée.

Dans tous les cas, il est ici important de déterminer l'énergie de soudage, car elle est un moyen indirect de déterminer le cycle thermique du métal fondu et plus particulièrement, le temps de refroidissement entre 800 et 500°C, qui détermine la microstruture de l'acier soudé.

En outre, le document de C. Harvey, Gas metal arc welding fume generation using pulsed current, Weld. J. 74 (11) (1995), pp. 59-s-68-s, est consacré à l'influence du courant pulsé sur l'émission de fumées pendant le soudage.

Enfin, les documents de C. Needham et al, Material transfer characteristics with pulsed current, Brit. Weld. J. 5 (1965), pp. 229-241; de M. Amin, Pulse current parameters for arc stability and controlled metal transfer in arc welding, Met. Construct. May 1983, pp. 272-37; et de S. Rajasekaran et al; Droplet detachment and plate fusion characteristics in pulsed current gas metal arc welding, Weld. J. 77 (6) (1998), pp. 254-s-269-s, traitent de l'influence du courant pulsé sur le détachement des gouttes de métal fondu.

Enfin, on peut citer le document de I.E. French et al. ; Special Basic Flux Cored Wire for All-Position Pulsed Welding, Weld. J. 76 (3) (1997), pp. 120-s-124-s qui fait référence à des travaux sur l'influence du courant pulsé sur les performances opératoires d'un fil fourré basique. Dans ce cas, la composition du flux d'un fil fourré basique est basée sur un mélange $CaF_2$-$CaCO_3$ et les performances opératoires obtenues avec un tel fil sont médiocres.

Une légère amélioration des performances est obtenue grâce à un mélange $CaF_2$-CaO-$SiO_2$, utilisé en soudage avec courant pulsé. En position verticale montante (3F), dans des conditions optimales de soudage, on obtient ainsi un taux de dépôt de 1.5 kg/h, ce qui correspond, au vu des rendements et du taux de remplissage du fil fourré indiqué, à une vitesse fil d'approximativement 3.2 à 3.4 m/min.

Or, une telle valeur de vitesse est trop faible pour espérer obtenir une productivité suffisante pour rendre le procédé intéressant au plan industriel. On peut la comparer à la valeur obtenue classiquement pour un fil rutile qui est d'environ 3.2 kg/h pour une vitesse fil de 8 m/min employée habituellement pour une position verticale montante.

Il s'ensuit que, bien que les fils basiques soient la solution technique idéale du point de vue des propriétés mécaniques et de la teneur en hydrogène diffusible pour le soudage des aciers à haute limite élastique, ils souffrent de grandes faiblesses que sont leur manque de productivité, c'est-à-dire le taux de dépôt, et des performances opératoires médiocres qui se traduisent par une forme de cordon très convexe et une quantité importante de projections sur la tôle du joint soudé nécessitant d'importantes opérations de meulage. Sans ces opérations de meulage le joint risque de présenter des défauts de compacité et d'angle de raccord en surface préjudiciables entre autre pour le comportement en fatigue de l'assemblage.

Au vu de cela, le problème qui se pose est de proposer un procédé de soudage à l'arc des aciers HLE mettant en oeuvre un fil fourré permettant non seulement d'obtenir de bonnes caractéristiques mécaniques du joint de soudage mais aussi une productivité élevée et compatible avec une utilisation dans le domaine industriel, à savoir typiquement une vitesse fil d'au moins 7 à 10 m/min en verticale montante, des cordons plats et très peu de reprise ou de parachèvement des joints soudés.

La solution de l'invention est un procédé de soudage à l'arc électrique d'au moins une pièce en acier mettant en oeuvre un fil fourré comprenant une enveloppe métallique externe contenant un flux contenant un mélange de $CaF_2$, $CaCO_3$ et $TiO_2$, caractérisé en ce que l'on soude, en direction verticale montante et en mettant en oeuvre un régime de soudage pulsé, au moins une pièce en acier ayant une limite élastique d'au moins 460 MPa.

Selon le cas, le procédé de l'invention peut comprendre l'une ou plusieurs des caractéristiques suivantes :

- l'enveloppe métallique du fil fourré est en acier, de préférence en acier C-Mn.
- le flux du fil fourré contient en outre les éléments Ni, Mn, Cr, Mo, Si et Fe.
- le flux du fil fourré représente de 10% à 20% du poids total du fil (taux de remplissage).
- le flux du fil fourré contient de 10% à 30% de $CaF_2$, de 1% à 20 % de $CaCO_3$ et de 0.1 % à 20 % de $TiO_2$.
- le flux du fil fourré contient en outre de 3 à 42% de Ni, de 8 à 30% de Mn, de 0.01 1 à 11% de Cr, de 0.01 à 13% de Mo, de 1.5 à 14% de Si, et du Fe pour le reste.
- l'enveloppe métallique du fil fourré est en acier C-Mn contenant de 0.01 à 0.08% de C et de 0.10 à 0.40% de Mn.
- on soude au moins une pièce en acier ayant une limite élastique d'au moins 690, de préférence entre 690 et 830 MPa.
- on met en oeuvre un régime de soudage pulsé.
- on opère un soudage en direction verticale montante.
- on met en oeuvre un mélange gazeux de protection constitué d'argon et de $CO_2$.
- on met en oeuvre un mélange gazeux de protection constitué d'argon, de $CO_2$ et d'$O_2$.

- la proportion de $CO_2$ est comprise entre 5 et 25% en volume.
- la proportion de $O_2$ est comprise entre 0,5 et 5% en volume.
- le gaz est formé d'un mélange binaire d'argon additionné de 20% en volume de $CO_2$.
- le gaz est formé d'un mélange binaire d'argon additionné de 8% en volume de $CO_2$.
- le gaz est formé d'un mélange ternaire d'argon additionné de 3% en volume de $CO_2$ et de 1.5% en volume de $O_2$.
- les paramètres de pulsation varient en fonction de la vitesse fil qui peut atteindre 6 m/min en soudage en direction verticale montante et est typiquement comprise entre 4 et 15 m/min en soudage en position à plat.
- chaque pulsation est définie par une fréquence de pulsation (f), une durée de pulsation (tp), un courant de base (Ib), un courant de crête (Ic), une tension de crête (Uc), des temps de montée (Tm) et de descente (Td) tels que :

  . la fréquence (f) de pulsation est comprise entre 40 et 400 Hz,
  . la durée des pulsations (tp) est comprise entre 0.5 et 2.5 msec,
  . le courant de base (Ib) est compris entre 20 et 240 A,
  . le courant de crête (Ic) est comprise entre 300 et 500 A,
  . la tension de crête (Uc) est comprise entre 22 et 37V,
  . le temps de montée (Tm) est compris entre 0.6 et 1.2ms, et/ou
  . le temps de descente (Tp) est compris entre 0.6 et 1.2ms.

- la forme des pentes de montée et de descente des pulsations est linéaire ou exponentielle, notamment en fonction de Uc et de la self globale de l'installation de soudage utilisée.

La présente invention va être mieux comprise grâce aux exemples explicatifs donnés ci-après en références aux figures annexées parmi lesquelles :

- la Figure 1 représente la manifestation de courts-circuits sur la tension de soudage en courant continu avec un fil fourré basique selon l'art antérieur ;
- la Figure 2 représente la répartition des courts-circuits en courant lisse pour une vitesse fil de 5 m/min en fonction de la polarité appliquée avec un fil fourré basique utilisé dans un procédé selon l'art antérieur ;
- la Figure 3 représente une répartition des courts-circuits pour une vitesse fil de 5 m/min en fonction du type de courant et de la polarité appliquée à un fil selon l'invention ; et
- la Figure 4 qui représente un enregistrement des paramètres de tension et d'intensité pendant le soudage avec un fil selon le procédé de l'invention, en courant pulsé.

Exemples

Confrontés au problème ci-dessus, les inventeurs de la présente invention se sont d'abord intéressés aux problèmes de comportement opératoire des fils fourrés basiques selon l'art antérieur pour essayer de comprendre ce qui causaient les problèmes et inconvénients susmentionnés.

Le fil selon l'art antérieur utilisé est un fil fourré de diamètre égal à 1.2 mm commercialisé sous la dénomination Fluxofil 42 LT par la société OERLIKON.

Le soudage de pièces en acier HLE, dont un exemple de composition chimique et de propriétés mécaniques est présenté dans le Tableau I ci-après (première colonne), est opéré en mettant en oeuvre ledit fil dans un procédé de soudage à l'arc avec gaz de protection de type ATAL 5A commercialisé par la société AIR LIQUIDE ; ce gaz est formé d'un mélange binaire d'argon additionné de 18% en volume de $CO_2$.

Ce faisant, les inventeurs de l'invention se sont rendus compte que les problèmes provenaient en fait d'un transfert de goutte très grossier depuis le fil vers le bain de métal en fusion et aussi d'un bain trop fluide et souvent perçu comme trop chaud, d'où il résultait la formation d'un cordon fortement convexe nécessitant d'importantes opérations de meulage avant de pouvoir reprendre le soudage.

Sans ces opérations de meulage ou analogue, l'opérateur s'expose à un risque important de manque de compacité de l'assemblage soudé, en particulier des inclusions de laitier dans le cordon de soudage, un manque de pénétration, un manque de fusion....

La productivité d'un tel fil selon l'art antérieur est donc médiocre comparée à un fil fourré de type rutile puisque la vitesse fil ne dépasse pas 5 m/min en position verticale montante et le cordon est très convexe, ce qui nécessite d'importantes reprises en meulage.

En fait, les problèmes de comportement opératoire rencontrés avec les fils de l'art antérieur s'expliquent par le fait que le régime obtenu normalement en courant lisse « CC » pour un fil basique, tel le fil fourré Fluxofil 42 LT, est un régime de transfert de type globulaire consistant en la formation de grosses gouttes de métal fondu à l'extrémité du fil. La fusion du fil se fait grâce à l'énergie de l'arc.

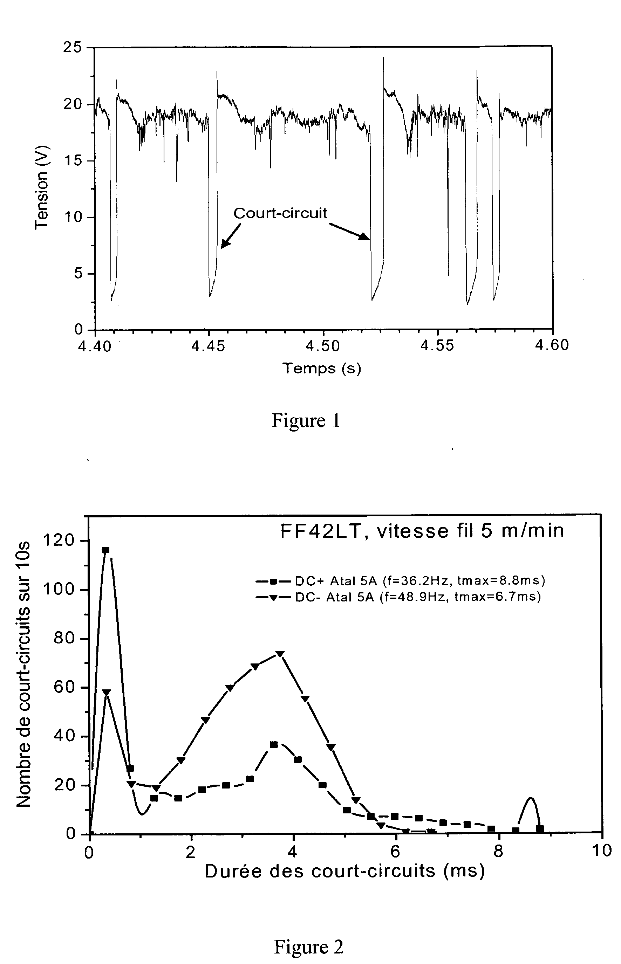

Ces grosses gouttes de métal fondu sont tournantes autour de l'arc, c'est-à-dire autour de l'axe du fil, et leur détachement est difficile, ce qui entraîne l'apparition d'un nombre important de courts-circuits dont la durée dépasse aisément la milliseconde, comme illustré sur les Figures 1 et 2.

Ces longs courts-circuits et ces grosses gouttes sont également responsables de projections de métal fondu sur le métal de base, pendant l'opération de soudage. Leur enlèvement prend du temps, ce qui a pour conséquence de diminuer encore la productivité de ce type de consommable.

Afin de résoudre ces problèmes, les inventeurs de la présente invention ont élaboré un fil fourré basique ayant pour composition de flux, un mélange $CaF_2$-$CaCO_3$-$TiO_2$.

D'une manière générale, un fil basique utilisable selon l'invention (en % massique) a la composition suivante :

- Feuillard en acier C-Mn contenant de 0.01 à 0.08% de C et de 0.10 à 0.40% de Mn.
- Flux formé de 10 à 30% de $CaF_2$, de 1 à 20 % de $CaCO_3$, de 0.1 à 20 % de $TiO_2$, de 3 à 42% de Ni, de 8 à 30% de Mn, de 0.01 à 11% de Cr, de 0.01 à 13% de Mo, de 1.5 à 14% de Si, et du Fe pour le reste (outre les impuretés inévitables éventuellement présentes).
- Taux de remplissage de 10 à 20%.

Dans le cas présent, le fil testé a la composition particulière (en % massique) suivante :

- Feuillard en acier C-Mn dans les proportions suivantes : 0.04% de C et 0.25% de Mn,
- Flux formé de 19% de $CaF_2$, 13 % de $CaCO_3$, 10 % de $TiO_2$, 19% de Ni, 12% de Mn, 2% de Cr, 4% de Mo, 4% de Si et reste de Fe. Les éléments d'alliage sont apportés sous forme de poudres mono élémentaires ou sous forme de ferro-alliages.
- Taux de remplissage d'environ 12%.

Après avoir testé ce fil fourré basique selon l'invention dans les mêmes conditions que le fil selon l'art antérieur, ils se sont aperçu qu'il permettait d'augmenter la productivité, à savoir la vitesse fil et le taux de dépôt en position verticale montante, d'obtenir un cordon plat, de n'avoir que peu de reprises de meulage et peu de nettoyage de la tôle après soudage ; et de limiter le niveau de qualification du soudeur grâce à un comportement opératoire nettement amélioré en courant pulsé.

Ce fil fourré basique selon l'invention avec flux de type $CaF_2$-$CaCO_3$-$TiO_2$ a été mis en oeuvre de manière particulièrement efficace avec une source de courant délivrant un courant électrique pulsé, à savoir un générateur de courant de dénomination commerciale DIGITWAVE 500 commercialisé par la société AIR LIQUIDE WELDING.

En fait, l'emploi d'un courant pulsé a permis d'améliorer de façon considérable la forme de cordon obtenue. Cette forme de cordon plus plate en courant pulsé permet donc de limiter, voire de supprimer les opérations de meulage, qui seraient nécessaires pour continuer l'assemblage dans de bonnes conditions et garantir un joint de qualité.

En effet, lorsque le fil est mis en oeuvre avec un courant lisse, c'est-à-dire non pulsé, le cordon obtenu est très convexe et des opérations de meulage sont dès lors indispensables pour aplanir le cordon et ainsi continuer le remplissage du joint dans de bonnes conditions car sinon, on prend le risque d'observer des manques de compacité du joint. Or, ces opérations de meulage sont longues et pénibles.

Cette forme de cordon aplatie obtenue avec le fil de l'invention s'explique notamment par un transfert de goutte plus régulier et plus fin de type spray (transfert par « pulvérisation ») grâce à l'application du courant pulsé. Ce régime spray permet d'obtenir un goutte à goutte sans problème de détachement, les gouttes ayant un diamètre du même ordre de grandeur que le diamètre du fil. A chaque pulsation correspond une goutte déposée dans le bain de fusion.

En fait, la fusion et le transfert du métal se fait alors selon une séquence comprenant 4 étapes principales, à savoir :

- début d'amorçage de l'arc : l'intensité et la tension commencent à augmenter.
- l'arc s'intensifie et permet de faire fondre le fil fourré basique.
- l'intensité est à son maximum et une goutte se forme.
- l'intensité et la tension diminuent amenant une constriction de l'extrémité du fil et un détachement facile de la goutte de métal fondu.

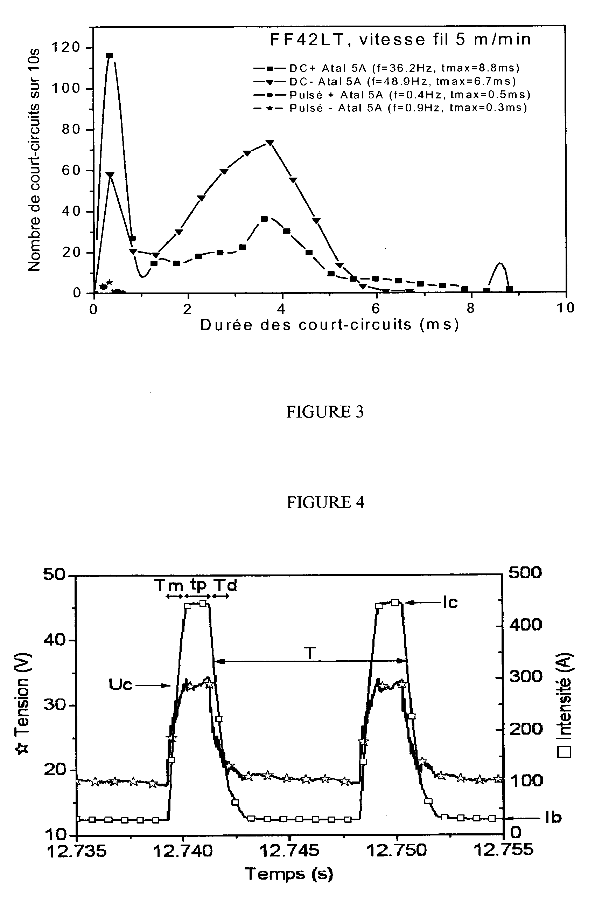

La Figure 3 présente un comparatif des courts-circuits observés en courant lisse et en courant pulsé avec un fil selon l'invention mis en oeuvre avec un mélange gazeux ATAL 5A pour une vitesse fil de 5 m/min.

Comme on peut le constater, le très faible nombre de courts-circuits et leur très courte durée, à savoir de l'ordre de 0.5 ms, confirme la stabilité du transfert de goutte obtenu grâce au régime pulsé et le fil de l'invention. En effet, le transfert de métal fondu se fait ainsi goutte à goutte, avec une goutte par pulsation. La taille des gouttes reste de l'ordre de grandeur du diamètre du fil fourré diminuant ainsi la formation de projection. L'arc plus directif et le transfert très régulier permettent au soudeur de maîtriser la répartition du métal déposé en garantissant un très bon mouillage. Cela a pour avantage de considérablement améliorer le comportement opératoire du fil fourré basique.

Au final, ce régime de transfert pulsé qui est en outre plus confortable pour le soudeur, permet d'augmenter la vitesse fil en position verticale montante jusqu'à des valeurs de 5.5 à 6 m/min, ce qui correspond à des taux de dépôt de 2.3 à 2.5kg/h, respectivement, sous gaz de protection ATAL 5A (Ar + 20 vol. % $CO_2$) et aussi ARCAL 21 (mélange Ar + 8 vol.% $CO_2$), et représente un gain de 22 et 33% sur la quantité de métal déposé en masse par unité de temps. Le gaz de protection de type ARCAL 21 est également commercialisé par la société AIR LIQUIDE ; ce gaz est formé d'un mélange binaire d'argon additionné de 8% en volume de $CO_2$.

Par ailleurs, les résultats de la caractérisation du métal fondu obtenu avec le fil de l'invention sur assemblage d'acier HLE, ici un acier de type Weldox 700E, en position verticale montante en courant lisse et en courant pulsé sont donnés dans le Tableau I ci-après.

On peut observer une augmentation des propriétés mécaniques de résilience à basse température et de traction avec respectivement des variations de +20 à 50% pour les résiliences et +11 à 13% pour la limite élastique en traction.

On constate que pour un même fil fourré selon l'invention, il est à la fois possible d'obtenir des propriétés mécaniques pour le soudage d'un acier à haute limite élastique de type 690 et un acier de type 830 en modifiant la nature du courant délivré par le générateur. En effet, la valeur de limite élastique est de 785 MPa pour un courant lisse alors qu'elle passe à 888 MPa pour un courant pulsé.

On constate également que cette augmentation des propriétés mécaniques est à la fois valable sous ATAL 5A et sous ARCAL 21, donc des mélanges Argon/$CO_2$ présentant des teneurs différentes en $CO_2$.

Tableau I : Propriétés mécaniques obtenues

| | Métal de base | Fil fourré basique selon l'invention | | | | | |
|---|---|---|---|---|---|---|---|
| Gaz de protection | | Atal 5A | | | | Arcal 21 | |
| Température entrepasses (°C) | | 150°C | | | | | |
| Paramètres de soudage | | DC-, 140A, 18.5V, vitesse fil=4.5m/min, HI=17-21kJ/cm | | Pulsé, Uc=28.4V, Ib-30A, Ic-400A, tp=1.2ms, f=83Hz, Tm=Td=0.8ms, forme exponentielle, synergie MCW, vitesse fil=5.5m/min, HI-14.5-18.1kJ/cm | | Pulsé, Uc=26.4V, Ib=30A, Ic-400A, tp=1.4ms, f=92Hz, Tm=Td=0.8ms, forme exponentielle, synergie MCW, vitesse fil=6.0m/min, HI=15.6-18.6kJ/cm | |
| Polarité | | - | | + | | + | |
| Analyse zone fondue | | En racine | Sous peau | En racine | Sous peau | En racine | Sous peau |
| C | 0.14 | 0.10 | 0.099 | 0.11 | 0.10 | 0.11 | 0.11 |
| Si | 0.32 | 0.49 | 0.52 | 0.54 | 0.52 | 0.58 | 0.62 |
| Mn | 1.21 | 1.64 | 1.68 | 1.77 | 1.65 | 1.62 | 1.79 |
| P | 0.008 | 0.008 | 0.008 | 0.007 | 0.007 | 0.008 | 0.007 |
| S | 0.002 | 0.011 | 0.012 | 0.008 | 0.008 | 0.008 | 0.010 |
| Cr | 0.23 | 0.25 | 0.25 | 0.26 | 0.24 | 0.25 | 0.27 |
| Mo | 0.13 | 0.39 | 0.43 | 0.50 | 0.50 | 0.46 | 0.58 |
| Ni | 0.038 | 1.71 | 2.01 | 2.01 | 2.09 | 1.76 | 2.03 |
| O | 0.0045 | 0.0398 | 0.0386 | 0.0350 | 0.0370 | 0.0304 | 0.0323 |
| N | 0.0046 | 0.0039 | 0.0036 | 0.0041 | 0.0039 | 0.0037 | 0.0035 |

(suite)

| Kv(J) | | | | | | | |
|---|---|---|---|---|---|---|---|
| Zone fondue -20°C | | 53-49-54 (52) | 54-54-58 (55) | 60-67-67 (65) | 65-66-68 (66) | 67-78-80 (75) | 60-62-56 (59) |
| Zone fondue -40°C | 179 | 43-41-44 (43) | 45-48-47 (47) | 54-50-56 (53) | 56-66-63 (62) | 59-68-60 (62) | 58-52-53 (54) |
| Zone fondue -60°C | | 24-37-31 (31) | 40-47-40 (42) | 46-50-46 (47) | 59-63-59 (60) | 52-52-46 (50) | 50-46-50 (49) |
| Traction | | | | | | | |
| Rp (MPa) | 825 | 785 | | 888 | | 869 | |
| Rm (MPa) | 856 | 857 | | 947 | | 932 | |
| A (%) | 17 | 18.1 | | 16.9 | | 15.4 | |

Dans le Tableau I ci-dessus, on définit Uc comme étant la tension crête de la pulsation, Ib comme étant l'intensité de base, Ic comme étant l'intensité crête, tp comme étant le temps de pulsation, f étant comme la fréquence de pulsation (inverse de la période T, f=1/T), Tm et Td comme étant les temps de montée et de descente de la pulsation.

Ces paramètres sont identifiés à la figure 4 qui représente un enregistrement des paramètres de tension et d'intensité en cours de soudage avec un fil de l'invention, en courant pulsé.

La valeur d'hydrogène diffusible dans le métal fondu étant également cruciale pour le soudage des aciers HLE, cette valeur a donc été déterminée dans le respect de la norme ISO 3690 sur le dit fil de l'invention pour un courant lisse et un courant pulsé.

On a ainsi obtenu des valeurs de 1.6 et 1.3 ml/100g de métal déposé, respectivement, en courant lisse et en courant pulsé sous gaz de type Atal 5A, à comparer avec une valeur de 1.7 ml/100g de métal déposé en courant pulsé sous gaz de type Arcal 21.

Ces résultats confirment la très faible teneur en hydrogène diffusible après soudage obtenue grâce à un fil dit basique selon l'invention.

Les résultats ainsi que les paramètres de soudage sont détaillé dans le Tableau II ci-après.

Tableau II : Hydrogène diffusible après soudage

| | Fluxofil 42 LT | | |
|---|---|---|---|
| Paramètre de la source de courant (générateur) | CC- 271A, 27.4V | f=220Hz, Uc=30.6V, Tp=1.4ms, Ib=120A | f=245Hz, Uc=30.6V, Tp=1.2ms, Ib=130A |
| Polarité | - | + | + |
| Gaz de protection | Atal 5A | Arcal 21 | Atal 5A |
| Vitesse fil (m/min) | 11 | | |
| Vitesse de soudage (cm/min) | 63 | | |
| Hydrogène diffusible (ml/100g de métal déposé) | | | |
| Essai 1 | 1.3 | 1.6 | 1.4 |
| Essai 2 | 2.2 | 1.6 | 1.5 |
| Essai 3 | 1.3 | 1.8 | 1.1 |
| Moyenne | **1.6** | **1.7** | **1.3** |

En définitive, ces essais montrent que les fils fourrés basiques de l'invention qui sont formés d'une enveloppe métallique tubulaire externe en acier remplie d'un flux de remplissage contenant un mélange d'éléments $CaF_2$, $CaCO_3$ et $TiO_2$ selon l'invention conduisent à d'excellents résultats en soudage à l'arc sous protection gazeuse, en particulier lorsqu'ils sont mis en oeuvre en régime de courant pulsé.

Des essais complémentaires ont montré que le procédé de l'invention donnait également de bons résultats lorsqu'on utilisait un mélange ternaire d'argon additionné de 3% en volume de $CO_2$ et de 1.5% de $O_2$ associé à un fil fourré comprenant une enveloppe métallique externe contenant un flux contenant un mélange de $CaF_2$, $CaCO_3$ et $TiO_2$.

## Revendications

1. Procédé de soudage à l'arc électrique en direction verticale montante d'au moins une pièce en acier ayant une limite élastique d'au moins 460 MPa mettant en oeuvre un fil fourré comprenant une enveloppe métallique externe contenant un flux, **caractérisé en ce que** l'on soude, en mettant en oeuvre un régime de soudage pulsé, et **en ce que** le flux contient un mélange de $CaF_2$, $CaCO_3$ et $TiO_2$.

2. Procédé selon la revendication précédente, **caractérisé en ce que** l'enveloppe métallique est en acier, de préférence en acier C-Mn.

3. Procédé selon l'une des revendications précédentes, **caractérisé en ce que** le flux contient en outre les éléments Ni, Mn, Cr, Mo, Si et Fe.

4. Procédé selon l'une des revendications précédentes, **caractérisé en ce que** le flux représente de 10% à 20% du poids total du fil.

5. Procédé selon l'une des revendications précédentes, **caractérisé en ce que** le flux contient de 10% à 30% de $CaF_2$, de 1% à 20 % de $CaCO_3$ et de 0.1% à 20 % de $TiO_2$.

6. Procédé selon l'une des revendications précédentes, **caractérisé en ce que** le flux contient en outre de 3 à 42% de Ni, de 8 à 30% de Mn, de 0.01 à 11% de Cr, de 0.01 à 13% de Mo, de 1.5 à 14% de Si et du Fe pour le reste.

7. Procédé selon l'une des revendications précédentes, **caractérisé en ce que** l'enveloppe métallique est en acier C-Mn contenant de 0.01 à 0.08% de C et de 0.10 à 0.40% de Mn.

8. Procédé selon l'une des revendications précédentes, **caractérisé en ce que** l'on soude au moins une pièce en acier ayant une limite élastique entre 690 et 830 MPa.

9. Procédé selon l'une des revendications précédentes, **caractérisé en ce qu'**on met en oeuvre un mélange gazeux de protection formé d'argon et de $CO_2$ ou d'argon de $CO_2$ et d'$O_2$.

10. Procédé selon l'une des revendications précédentes, **caractérisé en ce que** chaque pulsation de courant est définie par une fréquence de pulsation (f), une durée de pulsation (tp), un courant de base (Ib), un courant de crête (Ic), une tension de crête (Uc), des temps de montée (Tm) et de descente (Td) tels que :

   . la fréquence (f) de pulsation est comprise entre 40 et 400 Hz,
   . la durée des pulsations (tp) est comprise entre 0.5 et 2.5 msec,
   . le courant de base (Ib) est compris entre 20 et 240 A,
   . le courant de crête (Ic) est comprise entre 300 et 500 A,
   . la tension de crête (Uc) est comprise entre 22 et 37 V,
   . le temps de montée (Tm) est compris entre 0.6 et 1.2 ms et/ou
   . le temps de descente (Tp) est compris entre 0.6 et 1.2 ms.

## Patentansprüche

1. Verfahren zum Lichtbogenschweißen, in aufsteigender vertikaler Richtung, mindestens eines Stahlteils mit einer Elastizitätsgrenze von mindestens 460 Pa, bei dem ein Fülldraht mit einer äußeren Metallumhüllung, die ein Flussmittel enthält, verwendet wird, **dadurch gekennzeichnet, dass** unter Verwendung eines Pulsschweißstroms geschweißt wird und dass das Flussmittel ein Gemisch aus $CaF_2$, $CaCO_3$ und $TiO_2$ enthält.

2. Verfahren nach dem vorhergehenden Anspruch, **dadurch gekennzeichnet, dass** die Metallumhüllung aus Stahl, bevorzugt aus C-Mn-Stahl ist.

3. Verfahren nach einem der vorhergehenden Ansprüche, **dadurch gekennzeichnet, dass** das Flussmittel ferner die Elemente Ni, Mn, Cr, Mo, Si und Fe enthält.

4. Verfahren nach einem der vorhergehenden Ansprüche, **dadurch gekennzeichnet, dass** das Flussmittel 10 % bis 20 % des Gesamtgewichts des Drahtes darstellt.

5. Verfahren nach einem der vorhergehenden Ansprüche, **dadurch gekennzeichnet, dass** das Flussmittel 10 % bis 30 % $CaF_2$, 1 % bis 20 % $CaCO_3$ und 0,1 % bis 20 % $TiO_2$ enthält.

6. Verfahren nach einem der vorhergehenden Ansprüche, **dadurch gekennzeichnet, dass** das Flussmittel ferner 3 bis 42 % Ni, 8 bis 30 % Mn, 0,01 bis 11 % Cr, 0,01 bis 13 % Mo, 1,5 bis 14 % Si und im Übrigen Fe enthält.

7. Verfahren nach einem der vorhergehenden Ansprüche, **dadurch gekennzeichnet, dass** die Metallumhüllung aus C-Mn-Stahl ist, der 0,01 bis 0,08 % C und 0,10 bis 0,40 % Mn enthält.

8. Verfahren nach einem der vorhergehenden Ansprüche, **dadurch gekennzeichnet, dass** mindestens ein Stahlteil mit einer Elastizitätsgrenze zwischen 690 und 830 MPa geschweißt wird.

9. Verfahren nach einem der vorhergehenden Ansprüche, **dadurch gekennzeichnet, dass** ein Schutzgasgemisch verwendet wird, das aus Argon und $CO_2$ oder aus Argon, $CO_2$ und $O_2$ gebildet ist.

10. Verfahren nach einem der vorhergehenden Ansprüche, **dadurch gekennzeichnet, dass** jeder Stromimpuls durch eine Impulsfrequenz (f), eine Impulsdauer (tp), einen Basisstrom (Ib), einen Spitzenstrom (Ic), eine Spitzenspannung (Uc), eine Anstiegszeit (Tm) und eine Abstiegszeit (Td) definiert ist, wobei:

  - die Impulsfrequenz (f) zwischen 40 und 400 Hz beträgt,
  - die Impulsdauer (tp) zwischen 0,5 und 2,5 ms beträgt,
  - der Basisstrom (Ib) zwischen 20 und 240 A beträgt,
  - der Spitzenstrom (Ic) zwischen 300 und 500 A beträgt,
  - die Spitzenspannung (Uc) zwischen 22 und 37 V beträgt,
  - die Anstiegszeit (Tm) zwischen 0,6 und 1,2 ms beträgt und/oder
  - die Abstiegszeit (Tp) zwischen 0,6 und 1,2 ms beträgt.

## Claims

1. Method for electric arc welding, in an ascending vertical direction, at least one steel part having a yield strength of at least 460 MPa, using a flux-cored wire comprising an outer metal sheath containing a flux, **characterised in that** welding is carried out by using a pulsed welding regime, and **in that** the flux contains a mixture of $CaF_2$, $CaCO_3$ and $TiO_2$.

2. Method according to the preceding claim, **characterised in that** the metal sheath is made of steel, preferably C-Mn steel.

3. Method according to either of the preceding claims, **characterised in that** the flux further contains the elements Ni, Mn, Cr, Mo, Si and Fe.

4. Method according to any of the preceding claims, **characterised in that** the flux represents from 10 % to 20 % of the total weight of the wire.

5. Method according to any of the preceding claims, **characterised in that** the flux contains from 10 % to 30 % $CaF_2$, from 1 % to 20 % $CaCO_3$, and from 0.1 % to 20 % $TiO_2$.

6. Method according to any of the preceding claims, **characterised in that** the flux further contains from 3 to 42 % Ni, from 8 to 30 % Mn, from 0.01 to 11 % Cr, from 0.01 to 13 % Mo, from 1.5 to 14 % Si, and the remainder is Fe.

7. Method according to any of the preceding claims, **characterised in that** the metal sheath is made of C-Mn steel containing from 0.01 to 0.08 % C and from 0.10 to 0.40 % Mn.

**8.** Method according to any of the preceding claims, **characterised in that** at least one steel part having a yield strength of between 690 and 830 MPa is welded.

**9.** Method according to any of the preceding claims, **characterised in that** use is made of a protective gas mixture formed of argon and $CO_2$ or of argon, $CO_2$ and $O_2$.

**10.** Method according to any of the preceding claims, **characterised in that** each current pulse is defined by a pulse frequency (f), a pulse duration (tp), a base current (Ib), a peak current (Ic), a peak voltage (Uc), a rise time (Tm) and a fall time (Td) such that:

- the pulse frequency (f) is between 40 and 400 Hz,
- the pulse duration (tp) is between 0.5 and 2.5 ms,
- the base current (Ib) is between 20 and 240 A,
- the peak current (Ic) is between 300 and 500 A,
- the peak voltage (Uc) current is between 22 and 37 V,
- the rise time (Tm) is between 0.6 and 1.2 ms and/or
- the fall time (Tp) is between 0.6 and 1.2 ms.

Figure 1

Figure 2

FIGURE 3

FIGURE 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 09253886 A

**Littérature non-brevet citée dans la description**

- **C. HARVEY.** Gas metal arc welding fume generation using pulsed current. *Weld. J.,* 1995, vol. 74 (11), 59-68
- **C. NEEDHAM et al.** Material transfer characteristics with pulsed current. *Brit. Weld. J.,* 1965, vol. 5, 229-241
- **M. AMIN.** Pulse current parameters for arc stability and controlled metal transfer in arc welding. *Met. Construct.,* Mai 1983, 272-37
- **S. RAJASEKARAN et al.** Droplet detachment and plate fusion characteristics in pulsed current gas metal arc welding. *Weld. J.,* 1998, vol. 77 (6
- **I.E. FRENCH et al.** Special Basic Flux Cored Wire for All-Position Pulsed Welding. *Weld. J.,* 1997, vol. 76 (3), 120-124